# EUROPEAN PATENT SPECIFICATION

(11) **EP 4 195 456 B1**
(45) Date of publication and mention of the grant of the patent: **06.08.2025**
(21) Application number: 21212864.9
(22) Date of filing: 07.12.2021
(51) Int. Cl.: H02K 1/20, H02K 1/14

(54) **STATOR CORE**
STATORKERN
NOYAU DE STATOR

(43) Date of publication of application: 14.06.2023
(73) Proprietor: Hamilton Sundstrand Corporation, Charlotte, NC 28217-4578 (US)
(72) Inventor: DAY, Aaron, Comp Lane Borough Green Kent TN15 8QT (GB); HARRIS, Paul Charles, Leighton Buzzard Bedfordshire LU7 2SY (GB); POCOCK, Edward Graham Charles, Birmingham, B14 5DL (GB)
(74) Representative: Dehns

(56) References cited:
- WO-A1-2019/116389
- DE-A1- 102007 048 683
- US-B2- 10 903 701

## Description

### FIELD

This disclosure relates to a stator core for an electric machine.

### BACKGROUND

Electric machines or motors are used in a wide range of applications and many of these uses require high power output and high performance. The operation of these machines generates heat which, particularly for more compact machines, needs to be dissipated or removed. Improved power density may be achieved if cooling can be improved.

Electric machines typically comprise a rotor that rotates relative to a stator. For a permanent magnet machine, windings are typically provided on a core of the stator with permanent magnets provided on the rotor. As alternating currents are applied to the stator, magnetic fields are created which cause the rotor to rotate relative to the stator, generating torque on a rotor shaft to drive a mechanical device, e.g. a fan or propeller.

Fins or cooling channels on the outside of the stator core, in conjunction with a fluid cooling system, may be used to remove heat from the windings and stator. Improvements in such cooling systems are desirable to improve the performance of the motor.

US 10,903,701 B2 discloses a method of manufacturing an electric motor that includes a plurality of structural cooling features, where the electric motor utilizes axial cooling channels integral to the stator teeth and a coolant manifold assembly providing a means of distributing coolant to the axial cooling channels.

### SUMMARY

According to this disclosure, there is provided a stator core for an electric machine, wherein the stator core extends azimuthally around an axis, wherein the stator core comprises:
a stator tooth for mounting an electromagnetic coil; and
a cooling structure associated with the stator tooth;
wherein the cooling structure comprises a plurality of sections adjacent each other along a direction parallel to the axis of the stator core;
wherein each of the plurality of sections comprises a plurality of channels for the flow of a coolant;
wherein the plurality of channels are spaced azimuthally from each other;
wherein the plurality of channels are arranged asymmetrically about the stator tooth; and
wherein adjacent sections of the cooling structure along the axis of the stator core are substantially identical to each other when rotated 180 degrees about a radial direction relative to each other, wherein the stator core is characterised in that:
   the plurality of channels are symmetrical about a plane of symmetry in which lies the axis of the stator core and a radial direction, wherein the plane of symmetry is offset azimuthally from a plane in which lies the axis of the stator core and a radial direction passing through the centre of the stator tooth.

Also according to this disclosure, there is provided a method of manufacturing a stator core for an electric machine, the method comprising:
forming a stator tooth for mounting an electromagnetic coil and a plurality of sections of a cooling structure associated with the stator tooth;
wherein each of the plurality of sections comprises a plurality of channels for the flow of a coolant;
wherein the plurality of channels are spaced azimuthally from each other; and
wherein the plurality of channels are arranged asymmetrically about the stator tooth; and
wherein the method further comprises:
   arranging the plurality of sections of the cooling structure adjacent each other along a direction parallel to an axis of the stator core by rotating adjacent sections of the cooling structure through 180 degrees about a radial direction relative to each other;
   wherein adjacent sections of the cooling structure along the axis of the stator core are substantially identical to each other; wherein the method is characterised by:
the plurality of channels being symmetrical about a plane of symmetry in which lies the axis of the stator core and a radial direction, wherein the plane of symmetry is offset azimuthally from a plane in which lies the axis of the stator core and a radial direction passing through the centre of the stator tooth.

It will be appreciated that all of the features described herein relating to the stator core apply equally to the method of manufacturing the stator core, and vice versa.

The stator core, of an electric machine, which extends azimuthally around a longitudinal axis, has a stator tooth, on which (windings of) an electromagnetic coil can be mounted, and an associated cooling structure, for cooling the stator core.

The cooling structure is formed from multiple sections that are arranged adjacent to each other along the length of the stator core, parallel to the axis. Adjacent (e.g. all of the) sections of the cooling structure are substantially identical to each other but are rotated through 180 degrees (about the radial direction, perpendicular to the axis) relative to each other. Each section has multiple channels in which coolant can flow. The channels are positioned asymmetrically relative to the stator tooth.

The disclosure also extends to a stator comprising the stator core described herein and to an electric machine comprising the stator core or the stator described herein. In some embodiments the electric machine comprises an electric generator or an electric motor, e.g. an electric propulsion motor.

The stator core extends azimuthally (e.g. fully circumferentially) around an axis, e.g. a cylindrical or longitudinal axis of the stator core. In one embodiment the stator core is generally cylindrical.

The stator core comprises a tooth on which an electromagnetic coil of the electric machine may be mounted, e.g. to form a stator. In one embodiment the stator core comprises a plurality of (e.g. substantially identical) stator teeth and the method comprises forming a plurality of (e.g. substantially identical) stator teeth, wherein each tooth of the plurality of stator teeth is arranged for mounting an electromagnetic coil (or a portion thereof). In an embodiment, the plurality of stator teeth are spaced (e.g. evenly) azimuthally from each other (around the axis of the stator core), e.g. there is a gap between (e.g. each pair of) adjacent teeth.

In embodiments the stator tooth or each of the plurality of stator teeth extends in an axial direction (parallel to the axis of the stator core). In embodiments the stator tooth or each of the plurality of stator teeth has a substantially constant cross section (in a plane perpendicular to the axis of the stator core). In embodiments the stator tooth or each of the plurality of stator teeth project (e.g. radially) inwards. This may be appropriate when the electric motor comprises an inner rotor.

In embodiments the stator tooth or each of the plurality of stator teeth project (e.g. radially) outwards. This may be appropriate when the electric motor comprises an outer rotor.

In an embodiment, the stator tooth is symmetric about a plane in which lies the axis of the stator core and a radial direction passing through the centre of the stator tooth. This results in adjacent sections the stator tooth being able to be aligned with each other (e.g. having a constant cross section) along the length of the stator core, in the embodiments in which the stator tooth (or teeth) is formed in sections, e.g. integrally with the cooling structure section.

The stator tooth or the plurality of stator teeth may be formed in any suitable and desired way. In one embodiment (e.g. each section of) the (or each) stator tooth comprises a plurality of sheets (e.g. each in a plane perpendicular to the axis of the stator core) laminated (e.g. bonded) together, e.g. with a dielectric layer between each pair of sheets. Thus, the plurality of sheets may be stamped from one or more pieces (sheets) of material, e.g. metal, e.g. steel, e.g. electrical grade steel.

Thus, in an embodiment, the method comprises laminating a plurality of sheets together to form (e.g. each section of) the (or each) stator tooth. In an embodiment, the method comprises stamping the plurality of sheets from one or more pieces (sheets) of material. When each section of the stator tooth is substantially identical and/or when each stator tooth of the plurality of stator teeth is substantially identical, in an embodiment the method comprises forming (e.g. stamping each sheet of) each section of the stator tooth and/or each of the stator teeth using the same tool (e.g. stamp).

In one embodiment each sheet of the plurality of sheets forming the (or each) stator tooth has substantially the same size and shape (e.g. is substantially identical). In one embodiment the sheets of the plurality of sheets forming (e.g. each section of) the (or each) stator tooth are substantially aligned with each other, e.g. there is no offset between adjacent sheets in the radial and/or azimuthal directions and/or the edges of the (e.g. each section of) the (or each) stator tooth are substantially parallel to the axis of the stator core.

Thus, in an embodiment, the method comprises aligning the sheets of the plurality of sheets to form (e.g. each section of) the (or each) stator tooth.

A cooling structure is associated with the stator tooth. In an embodiment the stator core comprises a plurality of cooling structure segments adjacent each other (in the azimuthal direction) around the axis of the stator core, e.g. when the stator core comprises a plurality of stator teeth. In an embodiment, the method comprises forming a plurality of cooling structure segments and arranging the plurality of cooling structure segments adjacent each other (in the azimuthal direction) around the axis of the stator core.

Thus, in an embodiment, the plurality of cooling structure segments extend azimuthally (e.g. fully circumferentially) around the axis of the stator core. In an embodiment each of the plurality of stator teeth are associated with a (respective) cooling structure segment. Thus, in an embodiment, the method comprises forming a plurality of stator teeth and a plurality of respective segments of the cooling structure, wherein each of the plurality of stator teeth are associated with a (respective) cooling structure segment.

In an embodiment, the (e.g. segment of the) cooling structure is (and, e.g., projects) radially outward of the (e.g. respective) stator tooth with which it is associated, e.g. when the stator tooth projects inwards. This may be appropriate when the electric motor comprises an inner rotor.

In an embodiment, the (e.g. segment of the) cooling structure is (and, e.g., projects) radially inward of the (e.g. respective) stator tooth with which it is associated, e.g. when the stator tooth projects outwards. This may be appropriate when the electric motor comprises an outer rotor.

In an embodiment the stator tooth and the cooling structure are integrally formed, e.g. stamped from the same piece of material. Thus, in an embodiment, the method comprises integrally forming (e.g. sheets of) the stator tooth and the cooling structure. (When the stator core comprises a plurality of stator teeth, in an embodiment the plurality of stator teeth and the cooling structure are integrally formed, e.g. each tooth of the plurality of stator teeth and the respective cooling structure segment is integrally formed or the plurality of stator teeth and the cooling structure are integrally formed as a single (e.g. laminated) piece.)

Thus, in an embodiment, the stator tooth (or each of the plurality of stator teeth) comprises a plurality of sections adjacent each other along a direction parallel to the axis of the stator core, wherein each stator tooth section is (associated and) integrally formed with a respective cooling structure section (e.g. as a single (e.g. laminated) piece). Integrally forming the stator tooth and the cooling structure helps to conduct heat effectively from the stator tooth to the cooling structure.

In an embodiment the cooling structure comprises a slot or groove that receives a (proximal) end of the stator tooth. Thus, in an embodiment, the method comprises forming the stator tooth, forming the cooling structure with a slot or groove therein, and inserting the stator tooth into the slot or groove in the cooling structure. (When the stator core comprises a plurality of stator teeth, in an embodiment the cooling structure comprises a plurality of slots or grooves that each receive a (proximal) end of a (respective) stator tooth.)

The stator tooth (or each of the plurality of stator teeth) may be a single tooth (e.g. integrally formed or formed as a whole before inserting into the slot or groove) that is received by a slot or groove that is formed together by or in the plurality of cooling structure sections (which each comprise a portion of the slot or groove, and the slot or groove is formed when or after the cooling structure sections are assembled), or the stator tooth (or each of the plurality of stator teeth) may comprise a plurality of sections adjacent each other along a direction parallel to the axis of the stator core, wherein each stator tooth section is (associated with and) received by a slot or groove in a respective cooling structure section. In this embodiment, the cooling structure section and the respective stator tooth section may be assembled together to form a plurality of stator sections, which are then assembled to form the stator core.

Thus, in one embodiment, the method comprises forming a stator tooth and a plurality of cooling structure sections; arranging the plurality of cooling structure sections (e.g. to form an aligned slot or groove) and inserting the stator tooth into the slot or groove in the cooling structure. In one embodiment, the method comprises forming a plurality of stator teeth sections and a plurality of respective sections of the cooling structure, wherein each of the plurality of stator teeth sections are associated with a (respective) cooling structure section; and, for each of the plurality of stator teeth sections and the plurality of respective sections of the cooling structure, inserting the stator tooth section into the slot or groove in the respective cooling structure section (and arranging the plurality of stator tooth and cooling structure sections adjacent each other along a direction parallel to an axis of the stator core by rotating adjacent sections through 180 degrees about a radial direction relative to each other).

It will be appreciated that owing to the manner in which the stator tooth (or teeth) and the cooling structure may be associated with each other, in an embodiment, the stator core does not comprise an intermediate sleeve between the stator tooth (or teeth) and the cooling structure. This helps to provide good thermal communication between the cooling structure and the stator tooth (or teeth), which helps to conduct heat away from and cool the stator core.

In an embodiment the sections of the cooling structure, which are arranged adjacent each other along a direction parallel to the axis of the stator core, are (lie in planes) perpendicular to the axis of the stator core. In one embodiment each section of the cooling structure has flat end sections, e.g. that are (lie in respective planes) perpendicular to the axis of the stator core. In one embodiment each section of the cooling structure has a substantially constant dimension (thickness) in the direction parallel to the axis of the stator core. Thus, in one embodiment, the sections of the cooling structure are parallel to each other.

In some embodiments, adjacent sections of the cooling structure have interlocking features. These may be used to help to assemble the stator core.

In one embodiment, each section of the cooling structure is (e.g. integrally) formed as a single (e.g. laminated) piece that extends azimuthally (e.g. fully circumferentially) around the axis of the stator core. In one embodiment the stator core (e.g. each section of the cooling structure) comprises a plurality of cooling structure segments adjacent each other around the axis (the azimuthal direction) of the stator core. Thus, in an embodiment, the plurality of cooling structure segments (together) extend azimuthally (e.g. fully circumferentially) around the axis of the stator core, thus forming a cooling structure section that extends azimuthally (e.g. fully circumferentially) around the axis of the stator core.

As detailed above, when the cooling structure section comprises a plurality of cooling structure segments, in an embodiment each cooling structure segment is associated with a (respective) stator tooth (or section thereof).

In this embodiment, each cooling structure section may be formed by (and the method comprises) assembling together a plurality of cooling structure segments, and a plurality of cooling structure sections formed this way may then be assembled to form the cooling structure of the stator core.

The segments of the (each) cooling structure section may be linked together in any suitable and desired way, e.g. via a tongue and groove joint or other interlinking or interlocking joint. In an embodiment adjacent cooling structure segments comprise a complementary slot (e.g. that extends in an axial direction) and ridge (e.g. that extends in an axial direction). Thus, in an embodiment, each cooling structure segment comprises a slot (e.g. that extends in an axial direction) on one side of the segment and a ridge (e.g. that extends in an axial direction) on an opposite side of the segment.

In an embodiment each of the cooling structure segments around the axis of the stator core are substantially identical to each other. When each segment of the cooling structure is substantially identical, in an embodiment the method comprises forming (e.g. stamping each sheet of) each segment of the cooling structure using the same tool (e.g. stamp).

The (e.g. segments of the) sections of the cooling structure be formed in any suitable and desired way. In one embodiment each (e.g. segment of each) section of the cooling structure comprises a plurality of sheets (e.g. each in a plane perpendicular to the axis of the stator core) laminated (e.g. bonded) together, e.g. with a dielectric layer between each pair of sheets. Thus, the plurality of sheets may be stamped from one or more pieces (sheets) of material, e.g. metal, e.g. steel, e.g. electrical grade steel.

Thus, in an embodiment, the method comprises laminating a plurality of sheets together to form (e.g. each segment of) (e.g. each section of) the cooling structure. In an embodiment, the method comprises stamping the plurality of sheets from one or more pieces (sheets) of material. Adjacent sections (e.g. each section) of the cooling structure are substantially identical. Thus, in an embodiment, the method comprises forming (e.g. stamping each sheet of) each (and every) section of the cooling structure using the same tool (e.g. stamp).

When each segment of (e.g. each section of) the cooling structure is substantially identical in an embodiment the method comprises forming (e.g. stamping each sheet of) each segment of (e.g. each section of) the cooling structure using the same tool (e.g. stamp).

In one embodiment each sheet of the plurality of sheets forming each (e.g. segment of each) section of the cooling structure (and, e.g., integrally formed stator tooth or plurality of stator teeth) has substantially the same size and shape (e.g. is substantially identical). In one embodiment the sheets of the plurality of sheets forming each (e.g. segment of each) section of the cooling structure (and, e.g., integrally formed stator tooth or plurality of stator teeth) are substantially aligned with each other, e.g. there is no offset between adjacent sheets in the radial and/or azimuthal directions and/or the edges of each (e.g. segment of each) section of the cooling structure (and, e.g., integrally formed stator tooth or plurality of stator teeth) are substantially parallel to the axis of the stator core. Thus, while the channels of the cooling structure are offset from each other in adjacent sections, in embodiments there is no offset between the laminated sheets within a section individually.

Thus, in an embodiment, the method comprises aligning the sheets of the plurality of sheets to form (e.g. each segment of) each section of the cooling structure (and, e.g., integrally formed stator tooth or plurality of stator teeth).

When the (e.g. section of the) stator tooth (or plurality of stator teeth) is integrally formed with the (e.g. segment of the) section of the cooling structure, in an embodiment (e.g. each lamination sheet of) the (e.g. segment of the) section of the cooling structure and the stator tooth (or plurality of stator teeth) that is associated with the (e.g. segment of the) section of the cooling structure is stamped (as a single, integral piece) from one or more pieces (sheets) of material, e.g. metal, e.g. steel, e.g. electrical grade steel.

Thus, in an embodiment, the method comprises laminating a plurality of sheets together to form (e.g. each segment of) the (integrally formed) stator tooth (or plurality of stator teeth) and cooling structure section. In an embodiment, the method comprises stamping the plurality of sheets from one or more pieces (sheets) of material. In an embodiment, adjacent sections (e.g. each section) and/or each segment of the cooling structure and integral stator tooth (or plurality of stator teeth) are substantially identical. Thus, in an embodiment, the method comprises forming (e.g. stamping each sheet of) each section and/or segment of the cooling structure and integral stator tooth (or plurality of stator teeth) using the same tool (e.g. stamp).

When the (e.g. sections of the) stator tooth (or teeth) and the (e.g. segments of the) sections of the cooling structure are formed separately, one or both of the sections of the cooling structure and the stator tooth (or teeth) may be formed in this way and then assembled together.

The segments and/or sections of the cooling structure may be assembled and connected together in any suitable and desired way. In one set of embodiments, adjacent segments and/or sections of the cooling structure are pressed (e.g. mechanically clamped or clipped) together, welded together or bonded together (e.g. with an adhesive or a (e.g. impregnation) varnish).

The (e.g. sections of the) stator tooth (or teeth) and the (e.g. segments of the) sections of the cooling structure may be linked together in any suitable and desired way, e.g. via a tongue and groove joint or other interlinking or interlocking joint. In an embodiment the (e.g. sections of the) stator tooth (or teeth) comprise a slot or groove (e.g. that extends in an axial direction) and the (e.g. segments of the) sections of the cooling structure comprise a complementary ridge (e.g. that extends in an axial direction).

The slot(s) or groove(s) in the (e.g. segments of the) sections of the cooling structure may be formed when forming (e.g. stamping out) each sheet of each (e.g. segment of the) section of the cooling structure. In embodiments, the slot(s) or groove(s) in the (e.g. segments of the) sections of the cooling structure are formed (e.g. machined) after the plurality of sheets have been laminated together. In some embodiments the slot(s) or groove(s) in the (e.g. segments of the) sections of the cooling structure are formed (e.g. machined) after the (e.g. segments and) sections of the cooling structure have been connected together.

Each section of the cooling structure has a plurality of channels defined therein for the flow of a coolant through the channels. In an embodiment the plurality of channels (e.g. each) extend in a substantially axial direction (parallel to the axis of the stator core). In one embodiment the plurality of channels (e.g. each) has a substantially constant cross section along its length through the section of the cooling structure. This may, for example, be owing to the alignment of laminated sheets of the cooling structure sections, in the embodiments in which the cooling structure sections are formed in this way.

In one embodiment one or more (e.g. all) of the plurality of channels are enclosed, e.g. integrally surrounded by the material of the cooling structure. In this way, the fluid is contained within the cooling structure section.

In some embodiments one or more (e.g. all) of the plurality of channels are open, e.g. they are not integrally surrounded by the material of the cooling structure. The open channel(s) of the cooling structure section may be formed in any suitable and desired way. In one embodiment the (e.g. each) section of the plurality of sections of the cooling structure comprises a plurality of projections that form the plurality of channels for the flow of a coolant. For example, the plurality of channels may be defined between the plurality of projections.

In an embodiment, the plurality of projections are spaced azimuthally from each other. Thus, in this embodiment, adjacent projections (each pair of adjacent projections) have a spacing between them.

In an embodiment, the plurality of projections (e.g. each) extend in a substantially radial direction (perpendicular to the axis of the stator core), e.g. inwards or outwards from the axis of the stator core. In an embodiment the plurality of projections (e.g. each) extend in a substantially axial direction (parallel to the axis of the stator core).

In one embodiment the plurality of projections (e.g. each) has a substantially constant cross section along its length through the section of the cooling structure. This may, for example, be owing to the alignment of laminated sheets of the cooling structure sections, in the embodiments in which the cooling structure sections are formed in this way.

In some embodiments, e.g. when the plurality of channels are formed by a plurality of projections, the stator core comprises an inner or outer housing (e.g. sheath) that surrounds (and, e.g., encloses) the plurality of channels. This may be used to contain the coolant fluid. In one embodiment, the plurality of projections and the inner or outer housing together form a plurality of enclosed channels for the flow of a coolant.

The channels of the plurality of channels are (each) spaced from each other azimuthally. Thus, adjacent channels (each pair of adjacent channels) have a spacing between them, e.g. formed by the material of the (e.g. projection of the) section of the cooling structure. In embodiments, the width of a (e.g. each) channel (in an azimuthal direction) is greater than the thickness of the material (in an azimuthal direction) of the (e.g. projection of the) cooling structure.

The plurality of channels are arranged asymmetrically about the stator tooth, e.g. about a plane in which lies the axis of the stator core and a radial direction passing through the (e.g. centre of the) stator tooth.

The plurality of channels are arranged asymmetrically about the stator tooth.. The plurality of channels are symmetrical (e.g. about a plane of symmetry in which lies the axis of the stator core and a radial direction), wherein the plane of symmetry is offset (azimuthally) from a plane in which lies the axis of the stator core and a radial direction passing through the centre of the stator tooth. In this way, when adjacent sections of the cooling structure are rotated through 180 degrees relative to each other, the offset causes the channels in adjacent sections of the cooling structure not to be aligned with each other.

In an embodiment, when the stator core comprises a plurality of stator teeth, the cooling structure comprises a plurality of sets of a plurality of channels (e.g. each forming part of a segment of the cooling structure section), wherein each set of a plurality of channels is associated with a stator tooth, and wherein the plurality of channels are arranged asymmetrically about the stator tooth. The plurality of sets of the plurality of channels may be formed integrally with each other, e.g. to form a section of the cooling structure or, as outlined above, the cooling structure may be formed as a plurality of segments (together forming a cooling structure section), in which case, in an embodiment, each segment of the cooling structure section comprises a set of a plurality of channels.

The cooling structure is formed by (and the method comprises) arranging (e.g. connecting together) adjacent sections of the cooling structure along the axis of the stator core. The adjacent (e.g. all of the) sections are substantially identical to each other, with adjacent sections being rotated through 180 degrees relative to each other, i.e. the sections are arranged alternately back to front (facing in different axial directions) next to each other.

In an embodiment, the adjacent (and rotated) sections of the cooling structure are arranged relative to each other such that the plurality of channels in one cooling structure section are in fluid communication (but not aligned) with the plurality of channels in the adjacent cooling structure section. In one embodiment, the adjacent (and rotated) sections of the cooling structure are arranged relative to each other such that each channel of the plurality of channels in one cooling structure section is in fluid communication (but not aligned) with a (respective) channel of the plurality of channels in the adjacent cooling structure section.

Thus, in one embodiment, the plurality of channels in the sections of the cooling structure together form a plurality of fluid flow paths through the cooling structure. In an embodiment, (e.g. each fluid flow path of) the plurality of fluid flow paths are non-linear (owing to the offset between channels in adjacent sections). In an embodiment, (e.g. each fluid flow path of) the plurality of fluid flow paths has an average direction that is parallel to the axis of the stator core.

In an embodiment, the adjacent (and rotated) sections of the cooling structure are arranged relative to each other such that the plurality of channels in one cooling structure section are offset (azimuthally) from the plurality of channels in the adjacent cooling structure section, e.g. by less than half the width of a channel of the plurality of channels.

In one embodiment, the adjacent (and rotated) sections of the cooling structure are arranged relative to each other such that each channel of the plurality of channels in one cooling structure section is offset (azimuthally) from a (respective) channel of the plurality of channels in the adjacent cooling structure section, e.g. by less than half the width of the channel.

In an embodiment, the adjacent cooling structure sections are arranged (and the method comprises arranging the adjacent cooling structure sections) relative to each other such that the (e.g. sections of the) stator tooth (or teeth) is aligned along the axis of the stator core, e.g. either when the associated stator tooth (or teeth) is integrally formed with, or attached to, the cooling structure section. Thus, in an embodiment, the axis of rotation (the radial direction about which the adjacent sections of the cooling structure are rotated) lies in a plane that passes through the centre of the stator tooth and, e.g., the axis of the stator core. This helps to align the (e.g. sections of the) stator tooth (or teeth) and to offset the plurality of channels in adjacent cooling structure sections from each other.

The cooling structure (and thus, e.g., the stator core) may comprise any suitable and desired number of sections. In one embodiment the cooling structure comprises two or more sections, e.g. three or more sections, along the axis of the stator core. In one embodiment each section of the stator core is rotated by 180 degrees (about a radial direction) relative to each adjacent section. Thus, in one embodiment, alternate sections of the cooling structure (and, e.g., their plurality of channels) are aligned with (not offset from) each other. For example, alternate sections of the cooling structure (and, e.g., their plurality of channels) may be (e.g. axially) aligned with each other, e.g. such alternate sections of the cooling structure (and, e.g., their plurality of channels) have substantially no offset from each other in the radial and/or azimuthal directions.

The cooling structure may be cooled in any suitable and desired way. In one embodiment the electric machine comprises a cooling system for supplying a coolant fluid to the plurality of (e.g. sets of) channels of the cooling structure. The coolant fluid may comprise any suitable and desired fluid cooling medium, e.g. a liquid (such as oil, water or a water and glycol mixture) or a gas.

### BRIEF DESCRIPTION OF DRAWINGS

One or more non-limiting examples will now be described, by way of example only, and with reference to the accompanying figures in which:
Figure 1 shows a shows a perspective view of a core of a stator;
Figure 2 shows a plan view of the stator core shown in Figure 1;
Figure 3 shows an exploded view of two sections of the stator core shown in Figures 1 and 2;
Figure 4 shows a close up view of a cross-section of a section of the stator core shown in Figures 1 and 2;
Figure 5 shows a close up view of a section of the stator core shown in Figures 1 and 2;
Figure 6 shows a perspective view of part of a core of a stator;
Figure 7 shows a close up view of the stator core shown in Figure 6;
Figure 8 shows a perspective view of a section of a core of a stator;
Figure 9 shows a close up view of the section shown in Figure 8;
Figure 10 shows a perspective view of a section of a core of a stator;
Figure 11 shows one segment of the section of the stator core shown in Figure 10; and
Figure 12 shows one segment of a section of a core of a stator.

### DETAILED DESCRIPTION

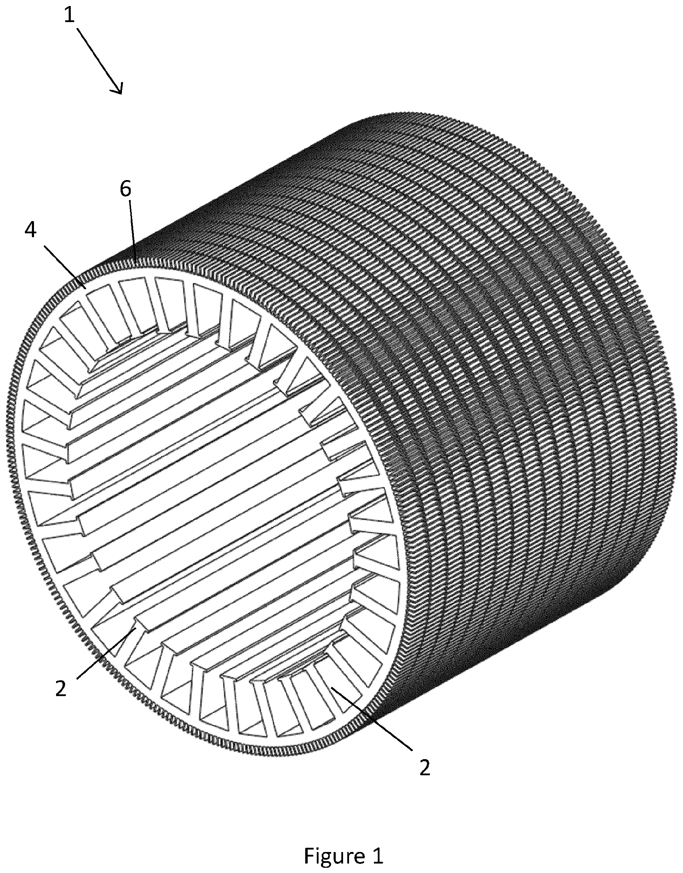

Figure 1 shows a perspective view of a core 1 of a stator. The core 1 has an overall cylindrical shape about a longitudinal axis. The core 1 includes multiple stator teeth 2 that extend axially with a constant cross-section. The stator teeth 2 are spaced azimuthally from each other and are shaped to receive windings of the stator.

The stator teeth 2 of the core 1 extend radially inwards from a continuous outer rim 4. Multiple heat conducting fins 6 are arranged on the outside of the outer rim 4 to form a cooling structure. The heat conducting fins 6 project radially from the outer rim 4 and extend axially along the outer surface of the outer rim 4.

As will be explained in more detail below, the core 1 is formed from multiple sections, which are then assembled together. The heat conducting fins 6 in each section are aligned axially and spaced azimuthally from each other, such that there is a channel therebetween. The heat conducting fins 6 in each section are offset azimuthally from the heat conducting fins 6 in each adjacent section, in an arrangement such that flow paths through the channels between the heat conducting fins 6 of adjacent sections of the stator core 1 are formed.

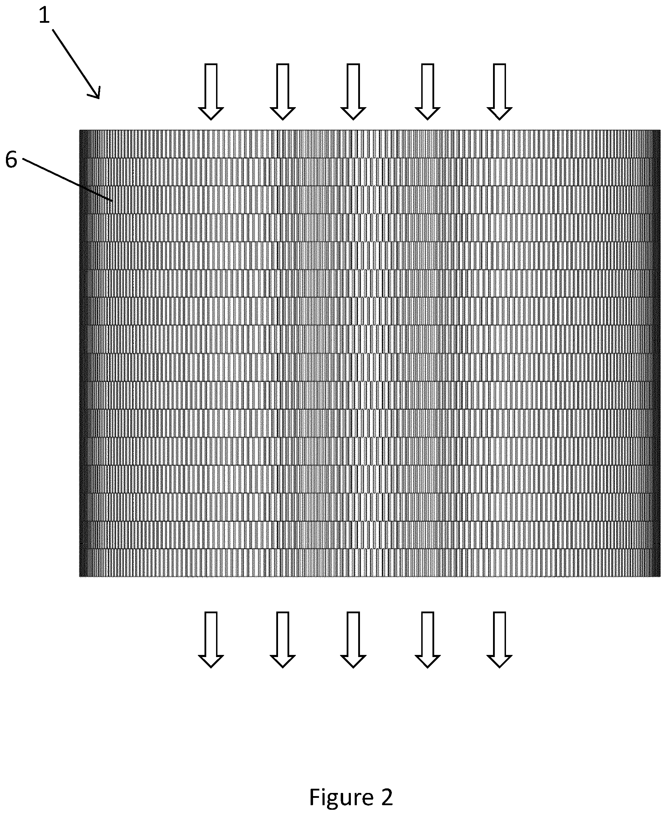

Figure 2 shows a plan view of the stator core shown in Figure 1. Also shown is the flow of coolant fluid through the channels formed by the heat conducting fins 6 (and, e.g., an outer sleeve (not shown)). The coolant fluid (at a cooler temperature) enters the channels of the stator core 1 at one end and flows in a substantially axial direction through the channels.

As the coolant fluid passes through the channels, it is heated by, inter alia, the heat conducting fins 6 of the stator core 1, such that the coolant fluid (at a higher temperature) exits the channels of the stator core 1 at the other end of the stator core 1. The heating of the coolant fluid thus acts to cool the stator core 1.

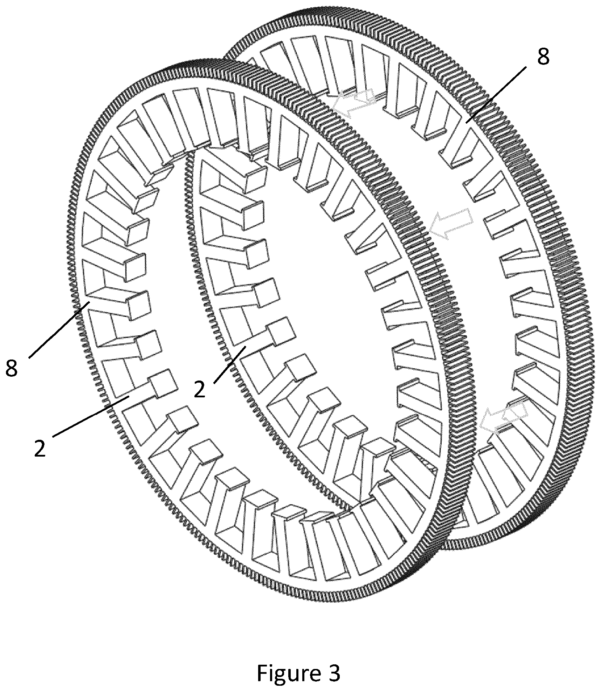

Figure 3 shows an exploded view of two sections 8 of the stator core 1 shown in Figures 1 and 2. The sections 8 are formed by stamping out the cross-sectional shape of the section from a sheet of electrical grade steel and laminating multiple such stamped shapes together, in an aligned manner, using a dielectric bonding agent, to form the laminated sections 8.

Each of the sections 8 is substantially identical and the stator core 1 is formed by assembling adjacent sections, which are rotated through 180 degrees relative to each other (about a direction perpendicular to the longitudinal cylindrical axis), such that the stator teeth 2 align with each other, as shown in Figure 1.

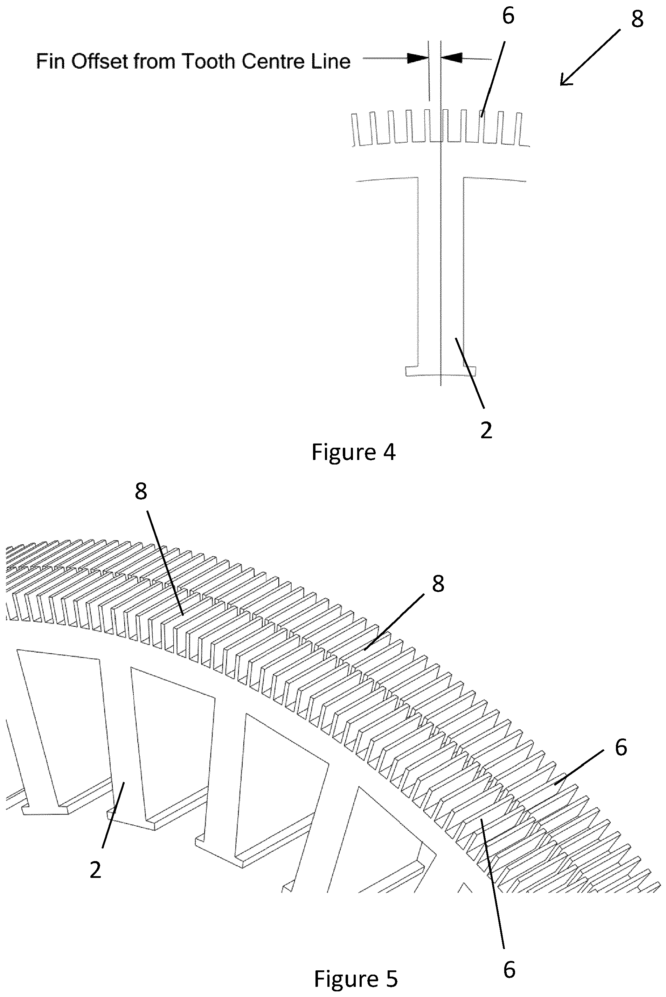

Figure 4 shows a close up view of a cross-section of a section 8 of the stator core 1 shown in Figures 1 and 2. From this, it can be seen that the heat conducting fins 6 are not symmetrically arranged about the centre of the stator tooth 2. Instead, they are offset from the centre of the stator tooth 2. This pattern applies for each stator tooth 2 of the section 8 of the stator core 1.

Figure 5 shows a close up view of a section 8 of the stator core 1 shown in Figures 1 and 2. The offset arrangement of the heat conducting fins 6 has the effect, as shown in Figure 5, that when two sections 8 of the stator core 1 are assembled adjacent each other, with one being rotated through 180 degrees relative to the other, the heat conducting fins 6 (and thus also the channels defined therebetween) do not align but are instead offset from each other between the adjacent sections 8.

The offset in the channels between the heat conducting fins 6 causes a non-linear, disrupted flow path for the coolant fluid. This causes turbulence in the coolant fluid that is used to cool the stator, which improves the rate of cooling.

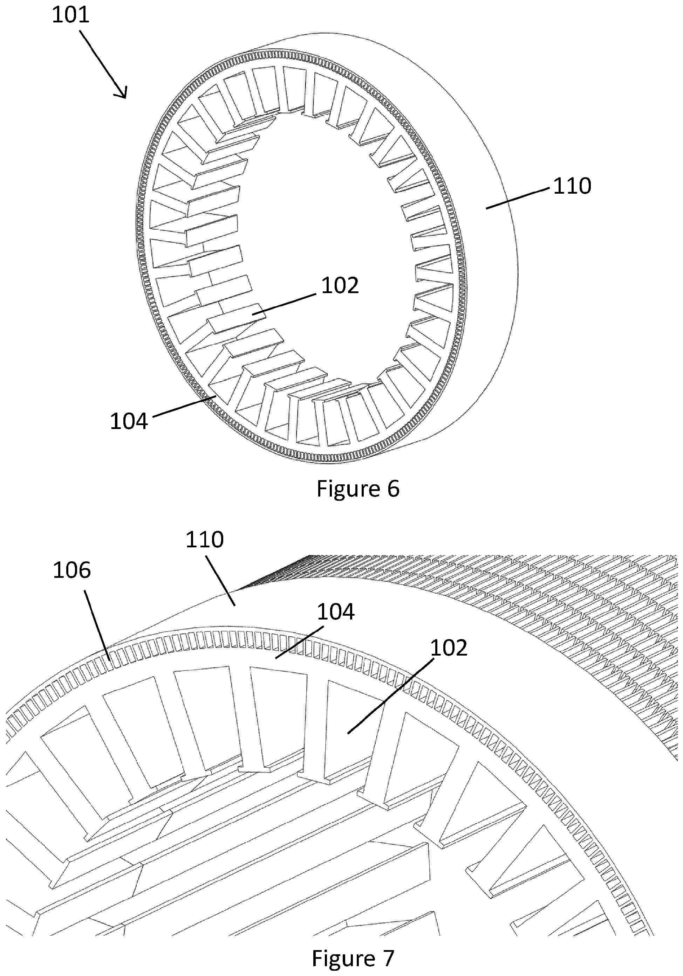

Figure 6 shows a perspective view of part of a core 101 of a stator. Figure 7 shows a close up view of the stator core 101 shown in Figure 6. The stator core 101 shown in Figures 6 and 7 is similar to that shown in Figures 1 to 5, except that it is shown with an outer sleeve 110 that encloses the heat conducting fins 106, thus forming enclosed channels. In Figure 7, only part of the outer sleeve 110 is shown, with the heat conducting fins 106 being shown exposed, for illustration.

The sleeve 110 may be fitted after the stator core 101 has been formed.

Alternatively, the sleeve 110 may be formed integrally with the stator teeth 102, the outer rim 104 and the heat conducting fins 106. In this arrangement, the sleeve 110 is stamped out with the rest of the shape (i.e. the stator teeth 102, the outer rim 104 and the heat conducting fins 106) of the stator core 101.

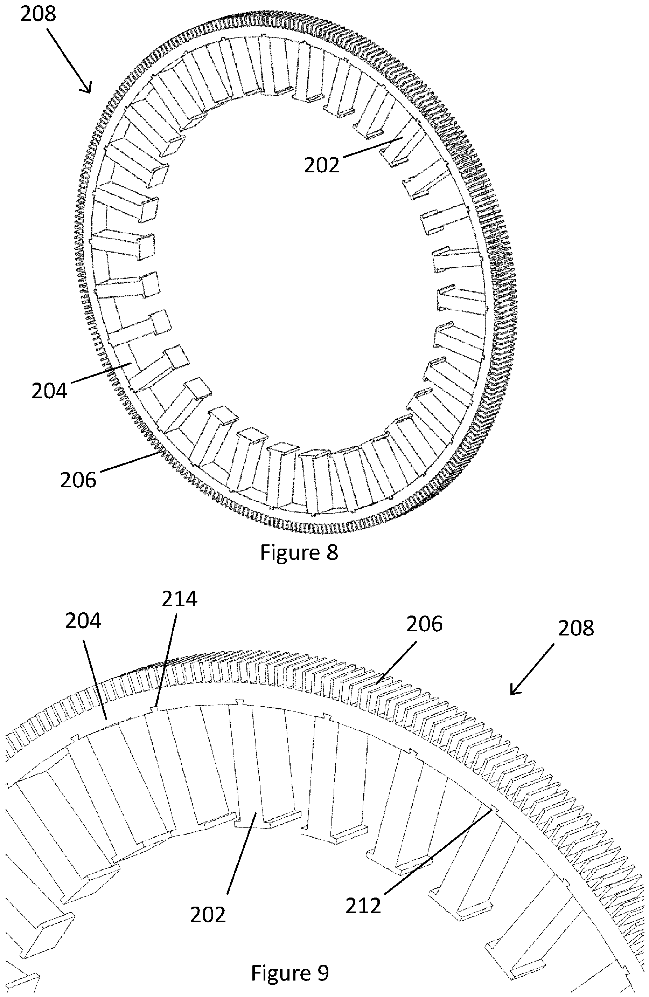

Figure 8 shows a perspective view of a section 208 of a core of a stator. Figure 9 shows a close up view of the section 208 shown in Figure 8. The section 208 of the stator core is similar to that shown in Figures 1 to 5. However, in the section 208 shown in Figures 8 and 9, the outer rim 204 and the heat conducting fins 206 are formed separately from the stator teeth 202. In this section 208, each stator tooth 202 is formed with a dovetail projection 212 that fits into a corresponding dovetail keyway 214 formed in the outer rim 204.

The outer rim 204 and the heat conducting fins 206 may be formed with the keyway present, e.g. when stamping out the outer rim 204 and the heat conducting fins 206. Alternatively, the keyway may be formed after the sheets of the outer rim 204 and the heat conducting fins 206 have been laminated together, with the keyway being machined through the section (or indeed multiple sections that have been connected together).

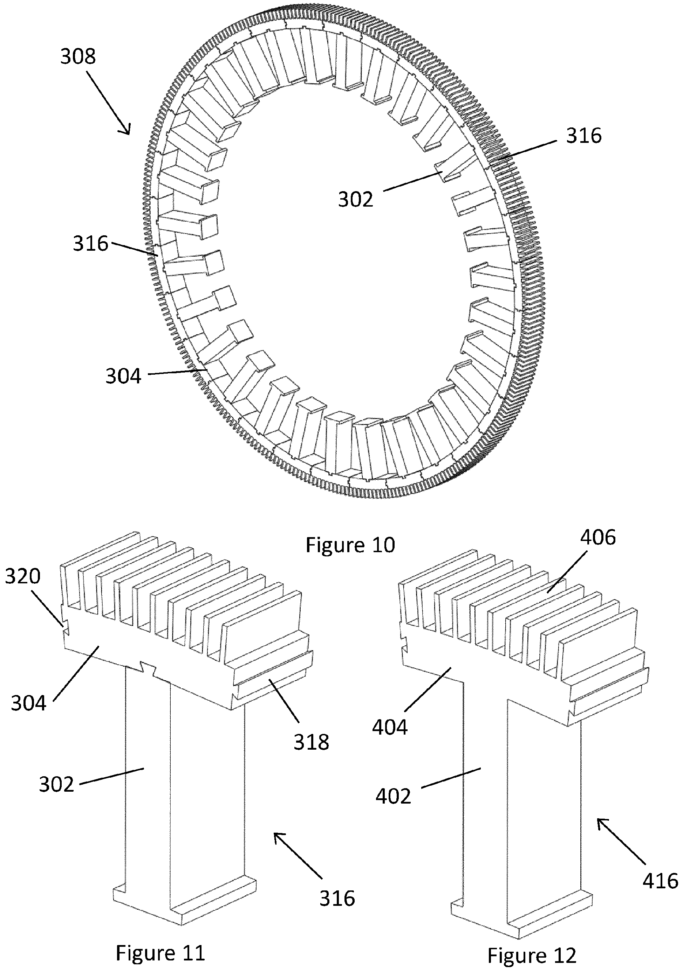

Figure 10 shows a perspective view of a section 308 of a core of a stator. The section 308 is similar to that shown in Figures 8 and 9, except that it is formed in segments 316, each segment 316 including a single stator tooth 302.

Figure 11 shows one segment 316 of the section 308 of the stator 301 shown in Figure 10. As can be seen, the outer rim 304 of the segment 316 has a dovetail projection 318 and a dovetail keyway 320 on opposite sides that allow the segments 316 to be connected together to form the whole section 308. This allows the segments 316 to be formed as smaller pieces initially and thus creates less material waste.

Figure 12 shows a similar segment 416, except in this design the stator tooth 402 is formed integrally with the outer rim 404 and heat conducting fins 406.

For the stator cores shown, the fully assembled core is to be fitted into a cylindrical housing of an electric motor. Stator windings are fitted to the teeth of the stator core and a rotor is inserted into the void within the stator core to form the electric motor.

Thus, in at least some embodiments, by arranging substantially identical sections of cooling structure relative to each other along the length of the stator core, with adjacent sections rotated through 180 degrees relative to each other, the channels in adjacent sections are offset from each other, owing to the asymmetry in the channels relative to the stator tooth (which has a defined position, azimuthally, along the axis of the stator core). Offsetting the channels from each other causes deviations in the flow path through the cooling structure. This causes turbulence in the fluid coolant that is used to cool the stator core, which improves the rate of cooling. Forming the cooling structure in this arrangement, from substantially identical sections, allows the stator core to be manufactured simpler and cheaper.

## Claims

1. A stator core (1) for an electric machine, wherein the stator core (1) extends azimuthally around an axis, wherein the stator core (1) comprises:
a stator tooth (2) for mounting an electromagnetic coil; and
a cooling structure (6) associated with the stator tooth (2);
wherein the cooling structure (6) comprises a plurality of sections (8) adjacent each other along a direction parallel to the axis of the stator core (1);
wherein each of the plurality of sections (8) comprises a plurality of channels for the flow of a coolant;
wherein the plurality of channels are spaced azimuthally from each other;
wherein the plurality of channels are arranged asymmetrically about the stator tooth; and
wherein adjacent sections (8) of the cooling structure (6) along the axis of the stator core (1) are substantially identical to each other when rotated 180 degrees about a radial direction relative to each other;
wherein the stator core (1) is **characterised in that**:
the plurality of channels are symmetrical about a plane of symmetry in which lies the axis of the stator core (1) and a radial direction, wherein the plane of symmetry is offset azimuthally from a plane in which lies the axis of the stator core (1) and a radial direction passing through the centre of the stator tooth (2).

2. A stator core (1) as claimed in claim 1, wherein the adjacent sections (8) of the cooling structure (6) are arranged relative to each other such that the plurality of channels in one cooling structure section (8) are in fluid communication with the plurality of channels in the adjacent cooling structure section (8).

3. A stator core (1) as claimed in claim 1or 2, wherein each section of the cooling structure (6) comprises a plurality of sheets laminated together.

4. A stator core (1) as claimed in any one of the preceding claims, wherein the plurality of channels extend in a substantially axial direction.

5. A stator core (1) as claimed in any one of the preceding claims, wherein the plurality of channels are enclosed.

6. A stator core (1) as claimed in any one of the preceding claims, wherein the plurality of channels are spaced from each other azimuthally.

7. A stator core (1) as claimed in any one of the preceding claims, wherein each section of the cooling structure (8) is formed as a single piece that extends azimuthally around the axis of the stator core.

8. A stator core (1) as claimed in any one of the preceding claims, wherein the stator tooth (2) has a substantially constant cross section.

9. A stator core (1) as claimed in any one of the preceding claims, wherein the stator tooth (2) is symmetric about a plane in which lies the axis of the stator core (1) and a radial direction passing through the centre of the stator tooth (2).

10. A stator core (1) as claimed in any one of the preceding claims, wherein the stator tooth (2) comprises a plurality of sections adjacent each other along a direction parallel to the axis of the stator core (1), wherein each stator tooth (2) section is integrally formed with a respective cooling structure section (8).

11. A stator core as claimed in any one of claims 1 to 9, wherein the cooling structure comprises a slot or groove (214) that receives an end of the stator tooth (212).

12. A stator core (1) as claimed in claim 11, wherein the stator tooth (2) is a single tooth that is received by a slot or groove (214) that is formed together by or in the plurality of cooling structure sections (8).

13. A method of manufacturing a stator core (1) for an electric machine, the method comprising:
forming a stator tooth (2) for mounting an electromagnetic coil and a plurality of sections of a cooling structure (8) associated with the stator tooth (2);
wherein each of the plurality of sections (8) comprises a plurality of channels for the flow of a coolant;
wherein the plurality of channels are spaced azimuthally from each other; and
wherein the plurality of channels are arranged asymmetrically about the stator tooth (2); and
wherein the method further comprises:
arranging the plurality of sections of the cooling structure (8) adjacent each other along a direction parallel to an axis of the stator core (1) by rotating adjacent sections of the cooling structure (8) through 180 degrees about a radial direction relative to each other;
wherein adjacent sections of the cooling structure (8) along the axis of the stator core (1) are substantially identical to each other; wherein the method is **characterised by**:
the plurality of channels being symmetrical about a plane of symmetry in which lies the axis of the stator core (1) and a radial direction, wherein the plane of symmetry is offset azimuthally from a plane in which lies the axis of the stator core (1) and a radial direction passing through the centre of the stator tooth (2).

## Patentansprüche

1. Statorkern (1) für eine elektrische Maschine, wobei sich der Statorkern (1) azimutal um eine Achse erstreckt, wobei der Statorkern (1) umfasst:
einen Statorzahn (2) zur Befestigung einer elektromagnetischen Spule; und
eine dem Statorzahn (2) zugeordnete Kühlstruktur (6);
wobei die Kühlstruktur (6) eine Vielzahl von Abschnitten (8) umfasst, die entlang einer Richtung parallel zur Achse des Statorkerns (1) aneinandergrenzen;
wobei jeder der mehreren Abschnitte (8) mehrere Kanäle für den Fluss eines Kühlmittels umfasst;
wobei die Vielzahl der Kanäle azimutal voneinander beabstandet sind;
wobei die Vielzahl von Kanälen asymmetrisch um den Statorzahn angeordnet ist; und
wobei benachbarte Abschnitte (8) der Kühlstruktur (6) entlang der Achse des Statorkerns (1) im Wesentlichen identisch zueinander sind, wenn sie um 180 Grad um eine radiale Richtung relativ zueinander gedreht werden;
wobei der Statorkern (1) **dadurch gekennzeichnet ist, dass**:
die Vielzahl der Kanäle symmetrisch zu einer Symmetrieebene ist, in der die Achse des Statorkerns (1) und eine radiale Richtung liegen, wobei die Symmetrieebene azimutal zu einer Ebene versetzt ist, in der die Achse des Statorkerns (1) und eine radiale Richtung liegen, die durch die Mitte des Statorzahns (2) verläuft.

2. Statorkern (1) nach Anspruch 1, wobei die benachbarten Abschnitte (8) der Kühlstruktur (6) so zueinander angeordnet sind, dass die Vielzahl von Kanälen in einem Kühlstrukturabschnitt (8) in Fluidverbindung mit der Vielzahl von Kanälen im benachbarten Kühlstrukturabschnitt (8) steht.

3. Statorkern (1) nach Anspruch 1 oder 2, wobei jeder Abschnitt der Kühlstruktur (6) aus einer Vielzahl zusammenlaminierter Bleche besteht.

4. Statorkern (1) nach einem der vorhergehenden Ansprüche, wobei die Vielzahl von Kanälen sich im Wesentlichen in axialer Richtung erstreckt.

5. Statorkern (1) nach einem der vorhergehenden Ansprüche, wobei die Vielzahl von Kanälen umschlossen ist.

6. Statorkern (1) nach einem der vorhergehenden Ansprüche, wobei die mehreren Kanäle azimutal voneinander beabstandet sind.

7. Statorkern (1) nach einem der vorhergehenden Ansprüche, wobei jeder Abschnitt der Kühlstruktur (8) als ein einzelnes Stück ausgebildet ist, das sich azimutal um die Achse des Statorkerns erstreckt.

8. Statorkern (1) nach einem der vorhergehenden Ansprüche, wobei der Statorzahn (2) einen im Wesentlichen konstanten Querschnitt aufweist.

9. Statorkern (1) nach einem der vorhergehenden Ansprüche, wobei der Statorzahn (2) symmetrisch zu einer Ebene ist, in der die Achse des Statorkerns (1) liegt, und einer radialen Richtung, die durch die Mitte des Statorzahns (2) verläuft.

10. Statorkern (1) nach einem der vorhergehenden Ansprüche, wobei der Statorzahn (2) mehrere Abschnitte umfasst, die entlang einer Richtung parallel zur Achse des Statorkerns (1) aneinandergrenzen, wobei jeder Abschnitt des Statorzahns (2) integral mit einem jeweiligen Kühlstrukturabschnitt (8) ausgebildet ist.

11. Statorkern nach einem der Ansprüche 1 bis 9, wobei die Kühlstruktur einen Schlitz oder eine Nut (214) umfasst, die ein Ende des Statorzahns (212) aufnimmt.

12. Statorkern (1) nach Anspruch 11, wobei der Statorzahn (2) ein einzelner Zahn ist, der von einem Schlitz oder einer Nut (214) aufgenommen wird, die gemeinsam durch oder in der Vielzahl von Kühlstrukturabschnitten (8) gebildet wird.

13. Verfahren zum Herstellen eines Statorkerns (1) für eine elektrische Maschine, wobei das Verfahren umfasst:
Bilden eines Statorzahns (2) zum Anbringen einer elektromagnetischen Spule und einer Vielzahl von Abschnitten einer Kühlstruktur (8), die mit dem Statorzahn (2) verbunden ist;
wobei jeder der mehreren Abschnitte (8) mehrere Kanäle für den Fluss eines Kühlmittels umfasst;
wobei die Vielzahl der Kanäle azimutal voneinander beabstandet sind; und
wobei die Vielzahl von Kanälen asymmetrisch um den Statorzahn (2) angeordnet ist; und
wobei das Verfahren ferner Folgendes umfasst:
Anordnen der mehreren Abschnitte der Kühlstruktur (8) nebeneinander entlang einer Richtung parallel zu einer Achse des Statorkerns (1) durch Drehen benachbarter Abschnitte der Kühlstruktur (8) um 180 Grad um eine radiale Richtung relativ zueinander;
wobei benachbarte Abschnitte der Kühlstruktur (8) entlang der Achse des Statorkerns (1) im Wesentlichen identisch zueinander sind; wobei das Verfahren **gekennzeichnet ist durch**:
die Vielzahl der Kanäle ist symmetrisch zu einer Symmetrieebene, in der die Achse des Statorkerns (1) und eine radiale Richtung liegen, wobei die Symmetrieebene azimutal zu einer Ebene versetzt ist, in der die Achse des Statorkerns (1) und eine radiale Richtung liegen, die **durch** die Mitte des Statorzahns (2) verläuft.

## Revendications

1. Noyau de stator (1) pour machine électrique, dans lequel le noyau de stator (1) s'étend de manière azimutale autour d'un axe, dans lequel le noyau de stator (1) comprend :
une dent de stator (2) pour le montage d'une bobine électromagnétique ; et
une structure de refroidissement (6) associée à la dent de stator (2) ;
dans laquelle la structure de refroidissement (6) comprend une pluralité de sections (8) adjacentes les unes aux autres le long d'une direction parallèle à l'axe du noyau de stator (1) ;
dans lequel chacune de la pluralité de sections (8) comprend une pluralité de canaux pour l'écoulement d'un liquide de refroidissement ;
dans lequel la pluralité de canaux sont espacés de manière azimutale les uns par rapport aux autres ;
dans lequel la pluralité de canaux sont agencés de manière asymétrique autour de la dent de stator ; et
dans lequel les sections adjacentes (8) de la structure de refroidissement (6) le long de l'axe du noyau de stator (1) sont sensiblement identiques les unes aux autres lorsqu'elles sont tournées de 180 degrés autour d'une direction radiale les unes par rapport aux autres ;
dans lequel le noyau de stator (1) est **caractérisé en ce que** :
la pluralité de canaux sont symétriques par rapport à un plan de symétrie dans lequel se trouve l'axe du noyau de stator (1) et par rapport à une direction radiale, dans lequel le plan de symétrie est décalé de manière azimutale par rapport à un plan dans lequel se trouve l'axe du noyau de stator (1) et par rapport à une direction radiale passant par le centre de la dent de stator (2).

2. Noyau de stator (1) selon la revendication 1, dans lequel les sections adjacentes (8) de la structure de refroidissement (6) sont agencées les unes par rapport aux autres de telle sorte que la pluralité de canaux dans une section de structure de refroidissement (8) sont en communication fluidique avec la pluralité de canaux dans la section de structure de refroidissement adjacente (8).

3. Noyau de stator (1) selon la revendication 1 ou 2, dans lequel chaque section de la structure de refroidissement (6) comprend une pluralité de feuilles stratifiées ensemble.

4. Noyau de stator (1) selon l'une quelconque des revendications précédentes, dans lequel la pluralité de canaux se prolongent dans une direction sensiblement axiale.

5. Noyau de stator (1) selon l'une quelconque des revendications précédentes, dans lequel la pluralité de canaux sont entourés.

6. Noyau de stator (1) selon l'une quelconque des revendications précédentes, dans lequel la pluralité de canaux sont espacés les uns des autres de manière azimutale.

7. Noyau de stator (1) selon l'une quelconque des revendications précédentes, dans lequel chaque section de la structure de refroidissement (8) est formée d'une seule pièce qui se prolonge de manière azimutale autour de l'axe du noyau de stator.

8. Noyau de stator (1) selon l'une quelconque des revendications précédentes, dans lequel la dent de stator (2) a une section transversale sensiblement constante.

9. Noyau de stator (1) selon l'une quelconque des revendications précédentes, dans lequel la dent de stator (2) est symétrique par rapport à un plan dans lequel se trouve l'axe du noyau de stator (1) et par rapport à une direction radiale passant par le centre de la dent de stator (2).

10. Noyau de stator (1) selon l'une quelconque des revendications précédentes, dans lequel la dent de stator (2) comprend une pluralité de sections adjacentes les unes aux autres le long d'une direction parallèle à l'axe du noyau de stator (1), dans lequel chaque section de dent de stator (2) est formée d'un seul tenant avec une section de structure de refroidissement respective (8).

11. Noyau de stator selon l'une quelconque des revendications 1 à 9, dans lequel la structure de refroidissement comprend une fente ou une rainure (214) qui reçoit une extrémité de la dent de stator (212).

12. Noyau de stator (1) selon la revendication 11, dans lequel la dent de stator (2) est une dent unique qui est reçue par une fente ou une rainure (214) qui est formée conjointement par la pluralité de sections de structure de refroidissement (8), ou dans celles-ci.

13. Procédé de fabrication de noyau de stator (1) pour machine électrique, le procédé comprenant :
la formation d'une dent de stator (2) pour le montage d'une bobine électromagnétique et d'une pluralité de sections d'une structure de refroidissement (8) associées à la dent de stator (2) ;
dans lequel chacune de la pluralité de sections (8) comprend une pluralité de canaux pour l'écoulement d'un liquide de refroidissement ;
dans lequel la pluralité de canaux sont espacés de manière azimutale les uns par rapport aux autres ; et
dans lequel la pluralité de canaux sont agencés de manière asymétrique autour de la dent de stator (2) ; et
dans lequel le procédé comprend également :
l'agencement de la pluralité de sections de la structure de refroidissement (8) de manière adjacente les unes par rapport aux autres le long d'une direction parallèle à un axe du noyau de stator (1) en tournant les sections adjacentes de la structure de refroidissement (8) de 180 degrés autour d'une direction radiale les unes par rapport aux autres ;
dans lequel les sections adjacentes de la structure de refroidissement (8) le long de l'axe du noyau de stator (1) sont sensiblement identiques les unes aux autres ; dans lequel le procédé est **caractérisé en ce que** :
la pluralité de canaux sont symétriques par rapport à un plan de symétrie dans lequel se trouve l'axe du noyau de stator (1) et par rapport à une direction radiale, dans lequel le plan de symétrie est décalé de manière azimutale par rapport à un plan dans lequel se trouve l'axe du noyau de stator (1) et par rapport à une direction radiale passant par le centre de la dent de stator (2).
